# EUROPÄISCHE PATENTSCHRIFT

(11) **EP 1 227 561 B1**
(45) Veröffentlichungstag und Bekanntmachung des Hinweises auf die Patenterteilung: **20.04.2016**
(21) Anmeldenummer: 02405017.1
(22) Anmeldetag: 14.01.2002
(51) Int. Cl.: H02H 7/08, H02P 1/04, H02P 1/20, B25D 16/00

(54) **Drehendes Elektrohandwerkzeug und Startsicherheitsroutine**
Rotatable electric hand tool with starting security system
Outil electrique rotatif avec système de sécurité pour démarrage

(30) Priorität: 24.01.2001 DE 10103142
(43) Veröffentlichungstag der Anmeldung: 31.07.2002
(73) Patentinhaber: HILTI Aktiengesellschaft, 9494 Schaan (LI)
(72) Erfinder: Hellmann, Peter, 86836 Obermeitingen (DE); Werdün, Guido, 58507 Lüdenscheid (DE); Reiner, Michael, 86830 Schwabmünchen (DE)
(74) Vertreter: Hilti Aktiengesellschaft Corporate Intellectual Property

(56) Entgegenhaltungen:
- EP-A- 0 771 619
- EP-A- 0 841 127
- EP-A- 1 008 422
- DE-A1- 3 128 410
- DE-A1- 3 707 052
- DE-A1- 4 344 817
- DE-A1- 19 641 618

## Beschreibung

Die Erfindung betrifft eine Startsicherheitsroutine und ein zugeordnetes drehendes Elektrohandwerkzeuggerät, insbesondere eine Bohrmaschine, einen Bohrhammer oder einen Kombihammer, wie sie im Oberbegriff der unabhängigen Ansprüche formuliert und aus den Dokumenten DE 43 44 817 A1, EP-A-0 771 619, DE 37 07 052 A1, EP-A-1 008 422, EP-A-0 841 127 und DE 196 41 618 A1 bekannt sind.

Bei grossen und leistungsstarken drehenden Elektrohandwerkzeuggeräten besteht die Gefahr der Verletzung des Nutzers durch Verdrehungen des Gehäuses durch plötzliche Werkzeugblockierungen als Folge der in Elektrohandwerkzeuggeräten gespeicherten kinetischen Energie. Bei Startblockierern, also bei einer bereits im Einschaltzeitpunkt vorliegenden Werkzeugblockade, besteht durch das plötzliche Auslenken des Gehäuses aus der Ruhelage eine besonders hohe Verletzungsgefahr.

Üblicherweise wird der diese Verdrehung durch die Blockierung erzeugende plötzliche hohe Drehimpuls durch Rutsch- oder Sicherheitskupplungen vom blockierten Werkzeug getrennt oder bezüglich des Drehmomentes begrenzt. Die Trennung erfolgt jedoch oftmals verspätet, so dass durch die bereits auf das Gehäuse des Elektrohandwerkzeuggerätes übertragene Rotationsenergie und ein nicht unerhebliches Restdrehmoment eine Auslenkung des Gehäuses nicht mehr verhindert werden kann.

Aus der DE3128410A1 ist die Messung des auf das Gehäuse wirkenden Drehmoments über den das Elektrohandwerkzeuggerät führenden Handgriff bekannt. Über die analoge Integration eines dem Drehmoment proportionalen Signals wird bei Überschreitung eines Grenzwertes eine Sicherheitseinrichtung zur Vermeidung eines Werkzeugblockierens, Klemmens und Würgens aktiviert. Nachteilig ist die zum Aufbau der Gegenkraft am Handgriff notwendige Führung des Elektrohandwerkzeuggerätes durch den Nutzer.

Aus der EP666148B1 ist ein Verfahren und eine Vorrichtung zur Vermeidung grosser Verdrehwinkel von Elektrohandwerkzeuggeräten bekannt, welche mit einem Mikrocontroller den in einem zukünftigen Zeitpunkt zu erwartenden Verdrehwinkel des Gehäuses aus der aktuellen Winkelbeschleunigung des Gehäuses im voraus berechnet und bei Überschreiten eines Grenzwertes eine Sicherheitseinrichtung zur Vermeidung dieser Überschreitung aktiviert. Bei Startblockaden kann es vereinzelt dennoch, insbesondere bei Nutzung an strombegrenzten Versorgungsnetzen durch die sich dann erst langsam aufbauende Rotorbeschleunigung des Elektromotors, zu einer derart geringen Winkelbeschleunigung des Gehäuses kommen, dass der im voraus berechnete Verdrehwinkel des Gehäuses den Grenzwert nicht überschreitet und folglich die Sicherheitseinrichtung nicht aktiviert wird.

Derart schwache Stromnetze treten insbesondere dann auf wenn: generell schwache Netze vorliegen; kleine Leitungsquerschnitte den Strom begrenzen; lange Verlängerungsleitungen benutzt werden; Trenntransformatoren im Leistungspfad liegen oder leistungsschwache Generatoren das Gerät speisen. Die Startströme in dieser Erfindung betrachteter leistungsstarker Elektrohandwerkzeuggeräte liegen bei Stromnetzen mit 230V/110V etwa in der Grössenordnung von 30A/60A.

Die Aufgabe der Erfindung besteht unter Vermeidung obiger Nachteile in der Weiterentwicklung einer mikroprozessorgesteuerten Sicherheitsroutine, um ein sicheres Erkennen von Startblockaden, insbesondere auch bei Nutzung an schwachen Stromnetzen, zu gewährleisten, sowie in einem zugeordneten Elektrohandwerkzeuggerät.

Die Aufgabe wird im wesentlichen durch die Merkmale der unabhängigen Ansprüche gelöst. Vorteilhafte Weiterbildungen ergeben sich aus den Unteransprüchen.

Ausgegangen wird von einem drehenden Elektrohandwerkzeuggerät mit einem Elektromotor und einer durch einen Mikrocontroller bei Überschreitung eines Grenzwertes, vorteilhaft einer im zeitlichen Voraus berechneten Verdrehung des Gehäuses, betätigten Sicherheitseinrichtung zur Trennung der Übertragung des Drehmoments zwischen einem Werkzeug und dem Elektromotor.

Im wesentlichen wird bei dem Elektrohandwerkzeuggerät mit einer als Programm abgelegten mikrocontrollergesteuerten Startsicherheitsroutine für einen ersten kurzen, sich an den Einschaltvorgang anschliessenden, Zeitabschnitt T₀ der Elektromotor mit der vollen effektiven Spannung versorgt. Durch eine über den Zeitabschnitt T₀ vorgenommene Messung des Rotordrehwinkels ϕ wird von dem Mikrocontroller die Rotorwinkelbeschleunigung berechnet. Aus diesem, vom Innenwiderstand des Stromnetzes abhängigen, Resultat wird der zum Auslösen der Sicherheitseinrichtung durch eine im Voraus berechnete Verdrehung α des Gehäuses zu überschreitende Grenzwert α_{G} und/oder der Abschaltzeitpunkt t_{A} berechnet. Diese adaptive Anpassung der Parameter der Startsicherheitsroutine erfolgt über eine für den Mikrocontroller, zumindest an Stützstellen, lesbare Abbildung in Abhängigkeit von dem Anlaufverhalten des Rotors des Elektromotors im Zeitabschnitt T₀.

Vorteilhaft wird im Zeitabschnitt T₀ eine mögliche, die effektive Spannung herabsetzende, Phasenanschnittssteuerung überbrückt, wodurch der Elektromotor im Anlaufverhalten definiert mit dem Stromnetz verbunden ist.

Weiterhin vorteilhaft ist ein, durch das im kurzen Zeitabschnitt T₀ erfasste Anlaufverhalten ermöglichtes, zu nur geringen Verdrehungen, bspw. < 60°, des Gehäuses führendes Verhalten des Elektrohandwerkzeuggerätes im Startblockierfall.

Vorteilhaft ist weiterhin das zuverlässige Ansprechen der, vorteilhaft im Voraus die Verdrehung des Gehäuses berechnenden, Sicherheitsroutine bei Startblockierungen auch über die in Normen spezifizierten Spannungsgrenzen des Stromversorgungsnetzes hinausgehend, da die Startsicherheitsroutine adaptiv ausgeführt ist.

Ein auf Grund der unterschiedlichen Versorgungsspannung länderspezifische Einstellung ist durch die adaptive Sicherheitsroutine nicht erforderlich.

Diese Startsicherheitsroutine wird vorteilhaft ohne über den Grenzwert hinausgehende Parameteränderungen in eine bestehende, die Verdrehung im voraus berechnende, Sicherheitsroutine implementiert. Die Startsicherheitsroutine kann daher zeitlich vor, oder höher priorisiert parallel zu der bestehenden, unveränderten Sicherheitsroutine als Programm durch den Mikrocontroller abgearbeitet werden.

Das drehende Elektrohandwerkzeuggerät mit mikroprozessorgesteuerter Sicherheitsroutine ist mit Mitteln zur Bestimmung des Drehwinkels oder der Drehzahl verbunden und der Mikrocontroller ist mit Mitteln zum Schalten des Elektromotors an das Stromnetz über einen, zumindest im zeitlichen Mittel wirkenden, effektiven Widerstand verbunden, welcher vorteilhaft Null oder unendlich ist.

Vorteilhaft ist der vom Mikrocontroller geschaltete Widerstand mit einer vorhandenen, die effektive Spannung zur Drehzahlregelung herabsetzenden, Phasenanschnittssteuerung verbunden, ist bspw. Teil dieser, und wird weiter vorteilhaft elektrisch überbrückt.

Die von der Ist-Drehzahl abhängige Regelung wird vorteilhaft während der, gegen die Hochlaufzeit auf die Solldrehzahl wesentlich kürzeren, Anlaufzeit voll ausgesteuert.

Die Erfindung wird nachfolgend näher erläutert anhand einer, das Verfahrensprinzip veranschaulichenden, Darstellung.

Nach der Darstellung wird der jeweils nicht dargestellte Elektromotor eines drehenden Elektrohandwerkzeuggerätes im Einschaltzeitpunkt t=0 und ruhendem Rotor bei einem Rotordrehwinkel ϕ=0 mit dem Stromnetz verbunden, wodurch der Rotordrehwinkel ϕ(t) entsprechend eines ersten Kurvenabschnitts 1 parabelförmig über der Zeit t mit dem Scheitelpunkt im Koordinatenursprung ansteigt. Während eines kurzen, vorzugsweise 100ms langen, sich an den Einschaltzeitpunkt t=0 anschliessenden Zeitabschnitt T₀, welcher vorteilhaft Teil der vollen Aussteuerung der Regelung und kürzer als die Hochlaufzeit auf eine Sollrotationsgeschwindigkeit ω_{S} ist, ist der Elektromotor mit der vollen effektiven Spannung des Stromnetzes verbunden und der Rotordrehwinkel ϕ erreicht zur Zeit t₁=T₀ den Wert ϕ₁. Zu späteren Zeiten t>T₀ wird durch eine vorteilhaft zwischen dem Elektromotor und dem Stromnetz geschaltete Phasenanschnittssteuerung eine Verminderung der effektiven Spannung für ein langsames Anlaufverhalten oder die Regelung auf die Sollrotationsgeschwindigkeit ω_{S} erzielt, wodurch nach einem trägheitsbedingten glatten Übergangsbereich im Kurvenabschnitt 2 der Rotordrehwinkel ϕ(t) mit einem konstanten Anstieg über der Zeit t ansteigt. Im dargestellten Fall einer Werkzeugstartblockade ist nach Kurvenabschnitt 2 die Verdrehung α des Gehäuses dem Rotordrehwinkel ϕ proportional und überschreitet 60°.

Zur Detektion einer derartigen Werkzeugstartblockade berechnet ein Mikrocontroller aus dem ersten Kurvenabschnitt 1 bzw. dem Wert ϕ₁ durch doppelte Bildung der zeitlichen Ableitung von ϕ(t) bzw. durch Berechnung der Quadratwurzel von ϕ₁ die der Stromstärke des Elektromotors proportionale Rotorstartbeschleunigung. Aus einer für den Mikrocontroller, zumindest an diskreten Stützstellen, lesbaren Abbildung der Rotorstartbeschleunigung zum Innenwiderstand des Stromnetzes wird vom Mikrocontroller der Grenzwert α_{G} adaptiv festgelegt. Die im zeitlichen Voraus zu einem Abschaltzeitpunkt t_{A} die Verdrehung α des Gehäuses für das Ansprechen der Sicherheitseinrichtung berechnende Sicherheitsroutine eines, vorteilhaft desselben, Mikrocontrollers trennt bei Überschreitung einer vorausberechneten Verdrehung α die Übertragung des Drehmoments und bremst die Rotation, wodurch sich ein Kurvenabschnitt 3 ergibt, welcher 60° nicht überschreitet. Bei schwachen Stromnetzen mit einem hohen Innenwiderstand erfolgt adaptiv eine Absenkung des Grenzwertes α'_{G} zu einem späteren, zeitlichen Voraus berechneten, Abschaltzeitpunkt t'_{A} entsprechend eines Kurvenabschnitts 1', 3'.

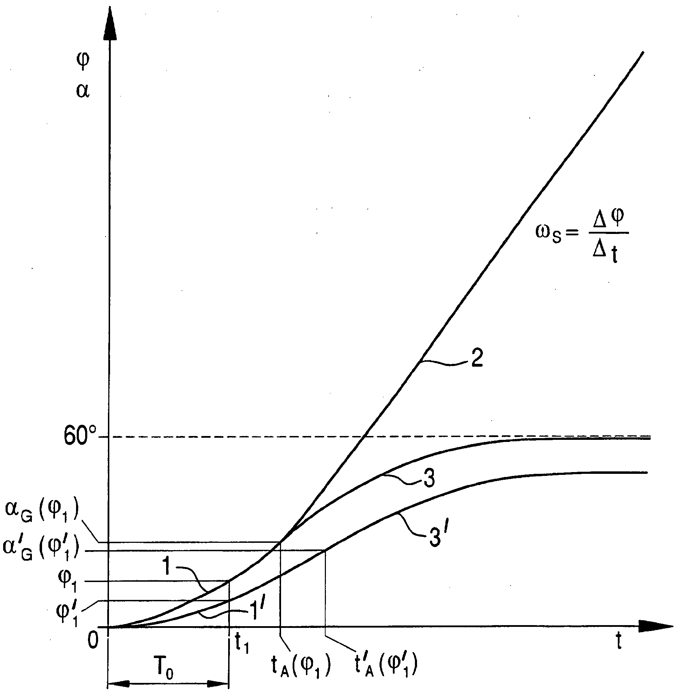

Anstatt der direkten Verbindung des Elektromotors mit dem Stromnetz ist auch ein fest bekannter oder messbarer effektiver Widerstand inkl. Null zwischen dem Elektromotor und dem Stromnetz anordenbar. Bei leistungsstarken Elektrohandwerkzeuggeräten sind Mittel zum Bestimmen der Drehzahl vorhanden, bspw. Magnetringe und zugeordnete Hallsensoren, welche zumindest diskret eine Messung des Rotordrehwinkels ϕ(t) ermöglichen. Die Abbildung der Rotorstartbeschleunigung zum Innenwiderstand des Stromnetzes kann auch direkt vom Wert des Rotordrehwinkels ϕ₁ oder von einem anderen Zwischenergebnis in den festzulegenden Grenzwert erfolgen. In allen Fällen wird das dynamische Anlaufverhalten des Rotors des Elektromotors zur Festlegung des Grenzwertes verwendet.

Somit hat die Startsicherheitsroutine nachfolgenden groben Programmablauf:
- in einem ersten Verfahrensschritt verbindet der Mikrocontroller für einen kurzen Zeitabschnitt T₀ den Elektromotor über einen festen oder vom Mikrocontroller ermittelbaren effektiven Widerstand einschliesslich Null mit dem Stromnetz,
- in einem zweiten Verfahrensschritt führt der Mikrocontroller mit Mitteln zur Bestimmung des Drehwinkels oder der Drehzahl über den Zeitabschnitt T₀ eine Messung des Rotordrehwinkels ϕ durch,
- in einem weiteren Verfahrensschritt berechnet der Mikrocontroller die Rotorwinkelbeschleunigung oder einen davon abhängigen Wert,
- in einem letzten Verfahrensschritt legt der Mikrocontroller aus der Rotorwinkelbeschleunigung oder einem davon abhängigen Wert über eine für ihn lesbare Abbildung den Grenzwert und/oder den Abschaltzeitpunkt fest.

## Patentansprüche

1. Verfahren für eine Startsicherheitsroutine eines zumindest eine Drehbewegung abgebenden Elektrohandwerkzeuggerätes mit einem Elektromotor und einer durch einen Mikrocontroller bei Überschreitung eines Grenzwertes (α_{G}) einer Sicherheitsroutine betätigten Sicherheitseinrichtung zur Trennung der Übertragung des Drehmoments zwischen einem Werkzeug und dem Elektromotor, **dadurch gekennzeichnet, dass**
in einem ersten Verfahrensschritt der Startsicherheitsroutine der Mikrocontroller für einen kurzen Zeitabschnitt (T₀) den Elektromotor über einen festen oder vom Mikrocontroller ermittelbaren effektiven Widerstand oder direkt mit dem Stromnetz verbindet,
in einem zweiten Verfahrensschritt der Mikrocontroller mit Mitteln zur Bestimmung des Drehwinkels oder der Drehzahl über den Zeitabschnitt (T₀) eine Messung des Rotordrehwinkels (ϕ) durchführt,
in einem weiteren Verfahrensschritt der Mikrocontroller die Rotorwinkelbeschleunigung oder einen davon abhängigen Wert berechnet und
in einem letzten Verfahrensschritt der Mikrocontroller aus der Rotorwinkelbeschleunigung oder dem davon abhängigen Wert über eine für ihn lesbare Abbildung den Grenzwert (α_{G}) und/oder den Abschaltzeitpunkt (t_{A}) festgelegt.

2. Verfahren für eine Startsicherheitsroutine nach Anspruch 1, **dadurch gekennzeichnet, dass** der kurze Zeitabschnitt (T₀) mit einem Einschaltvorgang des Elektrohandwerkzeuggerätes gestartet wird.

3. Verfahren für eine Startsicherheitsroutine nach Anspruch 1 oder Anspruch 2, **dadurch gekennzeichnet, dass** der effektive Widerstand Null ist und somit der Elektromotor direkt mit dem Stromnetz verbunden wird.

4. Verfahren für eine Startsicherheitsroutine nach einem der vorherigen Ansprüche, **dadurch gekennzeichnet, dass** mit dem effektiven Widerstand eine Phasenanschnittssteuerung überbrückt wird.

5. Verfahren für eine Startsicherheitsroutine nach einem der vorherigen Ansprüche, **dadurch gekennzeichnet, dass** zur Berechnung in einem ersten Kurvenabschnitt (1) der Rotordrehwinkel (ϕ(t)) zweifach differenziert wird.

6. Verfahren für eine Startsicherheitsroutine nach einem der vorherigen Ansprüche, **dadurch gekennzeichnet, dass** zur Berechnung aus dem Wert (ϕ₁) die Quadratwurzel gebildet wird.

7. Elektrohandwerkzeuggerät mit einem Elektromotor zur Erzeugung zumindest einer Drehbewegung des Elektrohandwerkzeuggerätes und
einer durch einen Mikrocontroller bei Überschreitung eines Grenzwerts (α_{G}) betätigten Sicherheitseinrichtung zur Trennung der Übertragung des Drehmoments zwischen einem Werkzeug und dem Elektromotor,
**gekennzeichnet dadurch, dass**
der Mikrocontroller mit Mitteln verbunden ist, welche geeignet sind, den Elektromotor für einen kurzen Zeitabschnitt (T₀) über einen festen oder vom Mikrocontroller ermittelbaren effektiven Widerstand oder direkt mit dem Stromnetz zu verbinden,
der Mikrocontroller mit Mitteln zur Bestimmung des Drehwinkels oder der Drehzahl verbunden ist zur Messung des Rotordrehwinkels (ϕ) über den Zeitabschnitt (T₀),
wobei der Mikrocontroller eingerichtet ist zum Berechnen einer Rotorwinkelbeschleunigung oder eines davon abhängigen Werts und zum Festlegen des Grenzwerts (α_{G}) und/oder des Abschaltzeitpunkts (t_{A}) aus der Rotorwinkelbeschleunigung oder dem von der Rotorwinkelbeschleunigung abhängigen Wert über eine lesbare Abbildung.

8. Elektrohandwerkzeuggerät nach Anspruch 7, **dadurch gekennzeichnet, dass** der vom Mikrocontroller schaltbare effektive Widerstand mit einer die effektive Spannung herabsetzenden Phasenanschnittssteuerung verbunden ist.

9. Elektrohandwerkzeuggerät nach Anspruch 8, **dadurch gekennzeichnet, dass** der vom Mikrocontroller schaltbare effektive Widerstand parallel zu einer, die effektive Spannung herabsetzenden, Phasenanschnittssteuerung angeordnet ist.

10. Elektrohandwerkzeuggerät nach einem der Ansprüche 7 bis 9, **dadurch gekennzeichnet, dass** dem Mikrocontroller das Programm für eine Startsicherheitsroutine nach einem der vorherigen Ansprüche 1 bis 6 zugeordnet Ist.

## Claims

1. Method for a start safety routine of an electric hand tool device generating at least one rotary movement, with an electric motor and a safety device for disconnecting the transmission of the torque between a tool and the electric motor actuated through a microcontroller on exceeding of a limit value (α_{G}) of a safety routine, **characterised in that**,
in a first method step of the start safety routine, the microcontroller connects the electric motor with the main power supply via a fixed effective resistance, or one determined by the microcontroller, or directly for a short time interval (T₀),
in a second method step the microcontroller carries out a measurement of the angle of rotation of the rotor (ϕ) with a means for determining the angle of rotation or the rotational speed over the time interval (T₀),
in a further method step the microcontroller calculates the rotor angle acceleration or a value dependent thereon, and
in a last method step the microcontroller defines from the rotor angle acceleration or the value dependent thereon, via a readable transformation, the limit value (α_{G}) and/or the shut-off time (t_{A}).

2. Method for a start safety routine according to claim 1, **characterised in that** the short time interval (T₀) is started when the electric hand tool device is switched on.

3. Method for a start safety routine according to claim 1 or claim 2, **characterised in that** the effective resistance is zero and thus the electric motor is connected directly with the mains power supply.

4. Method for a start safety routine according to one of the preceding claims, **characterised in that** a phase angle control is bridged with the effective resistance.

5. Method for a start safety routine according to one of the preceding claims, **characterised in** , for the purpose of calculation, in a first curve section (1) the angle of rotation of the rotor (ϕ(t)) is double-differentiated.

6. Method for a start safety routine according to one of the preceding claims, **characterised in that**, for the purpose of calculation, the square root is formed from the value (ϕ₁).

7. Electric hand tool device with an electric motor for generating at least one rotary movement of the electric hand tool device and
a safety device for disconnecting the transmission of the torque between a tool and the electric motor actuated through a microcontroller on exceeding of a limit value (α_{G}),
**characterised in that**
the microcontroller is connected with means which are capable of connecting the electric motor with the mains power supply via a fixed effective resistance, or one determined by the microcontroller, or directly, for a short time interval (T₀),
the microcontroller is connected with means for determining the angle of rotation or the rotational speed in order to measure the angle of rotation of the rotor (ϕ) over the time interval (T₀),
wherein the microcontroller is configured to calculate a rotor angle acceleration or a value dependent thereon and to define the limit value (α_{G}) and/or the shut-off time (t_{A}) from the rotor angle acceleration or the value dependent on the rotor angle acceleration via a readable transformation.

8. Electric hand tool device according to claim 7, **characterised in that** the effective resistance which can be connected by the microcontroller is connected with a phase angle control which reduces the effective voltage.

9. Electric hand tool device according to claim 8, **characterised in that** the effective resistance which can be connected by the microcontroller is arranged parallel to a phase angle control which reduces the effective voltage.

10. Electric hand tool device according to one of the claims 7 to 9, **characterised in that** the program for a start safety routine according to one of the preceding claims 1 to 6 is assigned to the microcontroller.

## Revendications

1. Procédé pour un sous-programme de sécurité au démarrage d'un outil électrique tenu à la main qui produit au moins un mouvement de rotation, comportant un moteur électrique et un dispositif de sécurité actionné par un microcontrôleur en cas de dépassement d'une valeur limite (α_{G}) d'un sous-programme de sécurité afin d'interrompre la transmission du couple entre un outil et le moteur électrique, **caractérisé en ce que**
à une première étape du procédé, le sous-programme de sécurité au démarrage du microcontrôleur relie, pendant une courte période de temps (T₀), le moteur électrique directement au réseau électrique ou par l'intermédiaire d'une résistance efficace fixe ou pouvant être déterminée par le microcontrôleur,
à une deuxième étape du procédé, le microcontrôleur effectue une mesure de l'angle de rotation du rotor (ϕ) avec des moyens permettant de déterminer l'angle de rotation ou la vitesse sur la période de temps (T₀),
à une autre étape du procédé, le microcontrôleur calcule l'accélération angulaire du rotor ou une valeur dépendante de celle-ci et
à une dernière étape du procédé, le microcontrôleur détermine la valeur limite (α_{G}) et/ou l'instant de coupure (t_{A}) à partir de l'accélération angulaire du rotor ou de la valeur dépendante de celle-ci par l'intermédiaire d'une représentation qu'il peut lire.

2. Procédé pour un sous-programme de sécurité au démarrage selon la revendication 1, **caractérisé en ce que** la courte période de temps (T₀) est démarrée par un processus de mise en marche de l'outil électrique tenu à la main.

3. Procédé pour un sous-programme de sécurité au démarrage selon la revendication 1 ou la revendication 2, **caractérisé en ce que** la résistance efficace est nulle et ainsi le moteur électrique est directement relié au réseau électrique.

4. Procédé pour un sous-programme de sécurité au démarrage selon l'une des revendications précédentes, **caractérisé en ce qu'**une commande de découpage de phase est pontée au moyen de la résistance efficace.

5. Procédé pour un sous-programme de sécurité au démarrage selon l'une des revendications précédentes, **caractérisé en ce que** l'angle de rotation du rotor (ϕ(t)) est dérivé deux fois pour le calcul dans une première partie de courbe (1).

6. Procédé pour un sous-programme de sécurité au démarrage selon l'une des revendications précédentes, **caractérisé en ce que** la racine carrée de la valeur (ϕ₁) est déterminée pour le calcul.

7. Outil électrique tenu à la main comportant un moteur électrique pour générer au moins un mouvement de rotation de l'outil électrique tenu à la main et un dispositif de sécurité activé par un microcontrôleur en cas de dépassement d'une valeur limite (α_{G}) pour interrompre la transmission du couple entre un outil et le moteur électrique,
**caractérisé en ce que**
le microcontrôleur est relié à des moyens qui sont adaptés pour relier, pendant une courte période de temps (T₀), le moteur électrique directement au réseau électrique ou par l'intermédiaire d'une résistance efficace fixe ou pouvant être déterminée par le microcontrôleur,
le microcontrôleur est relié à des moyens pour déterminer l'angle de rotation ou la vitesse afin de mesurer l'angle de rotation du rotor (ϕ₀) sur la période de temps (T₀),
dans lequel le microcontrôleur est configuré pour calculer une accélération angulaire du rotor ou une valeur dépendante de celle-ci et pour déterminer la valeur limite (α_{G}) et/ou l'instant de coupure (t_{A}) à partir de l'accélération angulaire du rotor ou de la valeur dépendante de l'accélération angulaire du rotor sur une représentation lisible.

8. Outil électrique tenu à la main selon la revendication 7, **caractérisé en ce que** la résistance efficace pouvant être commutée par le microcontrôleur est reliée à une commande de découpage de phase qui réduit la tension efficace.

9. Outil électrique tenu à la main selon la revendication 8, **caractérisé en ce que** la résistance efficace pouvant être commutée par le microcontrôleur est agencée parallèle à une commande de découpage de phase qui réduit la tension efficace.

10. Outil électrique tenu à la main selon l'une des revendications 7 à 9, **caractérisé en ce que** le programme pour un sous-programme de sécurité au démarrage selon l'une des revendications 1 à 6 précédentes est associé au microcontrôleur.
